# EUROPÄISCHE PATENTANMELDUNG

(11) **EP 3 203 156 A2**
(43) Veröffentlichungstag der Anmeldung: **09.08.2017**
(21) Anmeldenummer: 17154610.4
(22) Anmeldetag: 03.02.2017
(51) Int. Cl.: F24D 19/10, C02F 1/00, C02F 1/02

(54) **VERFAHREN UND VORRICHTUNG ZUR ERWÄRMUNG VON TRINKWASSER**

(30) Priorität: 03.02.2016 DE 202016100541 U
(71) Anmelder: Schramm, Bruno, 12623 Berlin (DE)
(72) Erfinder: Schramm, Bruno, 12623 Berlin (DE)
(74) Vertreter: Maikowski & Ninnemann Patentanwälte Partnerschaft mbB

(57) **Zusammenfassung**

Die Erfindung betrifft ein Verfahren und eine Vorrichtung zur Erwärmung von Trinkwasser und Bereitstellung von Warmwasser (WW) an mindestens einer Zapfstelle, wobei Erfindungsgemäß ist vorgesehen,
- in Abhängigkeit von der an der mindestens einen Zapfstelle entnommenen Menge Warmwasser (WW) ein Zufluss an Kaltwasser (KW) und ein Zufluss an Warmwasser aus einer Zirkulation (Z) zu (a) einem sekundärseitigen Vorlauf (1.1) eines ersten, zur Erwärmung des Trinkwassers vorgesehenen Wärmetauschers (E) und (b) einem primärseitigen Vorlauf (3.1) eines zweiten, zur Abkühlung des aus dem Reaktionsbehälter (R) oder der Reaktionsstrecke stammenden Trinkwassers vorgesehenen Wärmetauschers (K) zu steuern, und/oder
- denn ersten, zur Erwärmung des Trinkwassers vorgesehenen Wärmetauscher (E) und den zweiten zur Abkühlung des aus einem Reaktionsbehälter (R) oder einer Reaktionsstrecke stammenden Trinkwassers vorgesehenen Wärmetauscher (K) in einem Trinkwasserkreis parallel zu schalten.

## Beschreibung

Die Erfindung betrifft ein Verfahren und eine Vorrichtung zum Erwärmen von Trinkwasser unter Desinfektion des erwärmten Trinkwassers mittels wenigstens eines Reaktionsbehälters und/oder einer Reaktionsstrecke.

Beispielsweise aus der DE 10 2004 045 059 B3 ist ein Verfahren zur Erwärmung von Trinkwasser und Bereitstellung von Warmwasser an mindestens einer Zapfstelle sowie eine zugehörige Vorrichtung bekannt, bei der das Trinkwasser mittels wenigstens eines ersten Wärmetauschers mindestens auf eine Reaktionstemperatur erwärmt wird und das mindestens auf die Reaktionstemperatur zu Desinfektion erwärmte Trinkwasser über eine sekundärseitige Rücklaufleitung des ersten Wärmetauschers einem Reaktionsbehälter zugeführt wird. Aus dem Reaktionsbehälter stammendes Trinkwasser wird dann mittels wenigstens eines zweiten Wärmetauschers auf eine Zapf- oder Betriebstemperatur abgekühlt und über eine sekundärseitige Rücklaufleitung des zweiten Wärmetauschers in Richtung der Zapfstelle geführt. Für ungenutztes Warmwasser ist wenigstens eine Zirkulation vorgesehen.

Bei einem gattungsgemäßen, aus der DE 10 2004 045 059 B1 bekannten Verfahren sind der erste, der Erwärmung des Trinkwassers dienende Wärmetauscher und der zweite, der Abkühlung dienende Wärmetauscher in einem Trinkwasserkreis seriell, also in Reihe, geschaltet, d.h., wenigstens eine Rücklaufleitung des einen Wärmetauschers ist mit einem Vorlauf des anderen Wärmetauschers verbunden. Ferner sind die ersten und zweiten Wärmetauscher auch heizkreisseitig seriell geschaltet, sodass dem ersten Wärmetauscher primärseitig zugeführtes Heizmedium über einen primärseitigen Rücklauf des ersten Wärmetauschers dem primärseitigen Vorlauf des zweiten Wärmetauschers zugeführt wird. Das Heizmedium stammt beispielsweise aus einem Wärmeenergiespeicher oder Wärmeenergiequelle. Es kann grundsätzlich über einen Fernwärmeanschluss oder eine Wärmeversorgungsanlage bereitgestellt sein.

Ferner sind aus der DE 10 2014 003 244 A1 ein vergleichbares Verfahren und eine vergleichbare Vorrichtung zur Erwärmung von Trinkwasser und Bereitstellung von Warmwasser an mindestens einer Zapfstelle bekannt. Auch hier ist insbesondere vorgesehen, dass ein erster und ein zweiter Wärmetauscher, die einerseits zur Erwärmung des Trinkwassers und andererseits zur Abkühlung des Trinkwassers vorgesehen sind, in Reihe geschaltet sind.

Hiervon ausgehend liegt der Erfindung die Aufgabe zugrunde, ein verbessertes Verfahren und eine verbesserte Vorrichtung zur Erwärmung von Trinkwasser unter Nutzung eines Reaktionsbehälters und/oder einer Reaktionsstrecke zur Desinfektion des Trinkwassers bereitzustellen, zum Beispiel um geringere Rücklauftemperaturen in Richtung eines heizkreisseitigen Wärmeenergiespeichers oder Wärmeenergiequelle zu realisieren und/oder Druckverluste im Trinkwasser- und/oder Heizwasserkreis zu verringern.

Diese Aufgabe wird sowohl mit einem Verfahren des Anspruchs 1 oder des Anspruchs 12 als auch mit einer Vorrichtung des Anspruchs 14 oder des Anspruchs 15 gelöst.

Gemäß einem ersten Aspekt der Erfindung ist dabei ein Verfahren zur Erwärmung von Trinkwasser und Bereitstellung von Warmwasser an mindestens einer Zapfstelle vorgeschlagen, bei dem in Abhängigkeit von der an der mindestens einen Zapfstelle entnommenen Menge Warmwasser ein Zufluss an Kaltwasser und ein Zufluss an Warmwasser aus der Zirkulation zu (a) einem sekundärseitigen Vorlauf des ersten, zur Erwärmung des Trinkwassers vorgesehenen Wärmetauschers und zu (b) einem primärseitigen Vorlauf des zweiten, zur Abkühlung des aus dem Reaktionsbehälter oder der Reaktionsstrecke stammenden Trinkwassers vorgesehenen Wärmetauschers gesteuert, vorzugsweise geregelt wird.

Indem sekundärseitig der erste Wärmetauscher, der das Trinkwasser mindestens auf die Reaktionstemperatur erwärmt, und primärseitig der zweite Wärmetauscher, der zur Abkühlung des aus dem Reaktionsbehälter oder der Reaktionsstrecke kommenden Trinkwassers vorgesehen ist, mit einer variablen Menge an Kaltwasser und/oder Warmwasser aus der Zirkulation gespeist werden, kann ein sehr einfacher Heizkreisaufbau realisiert werden, beispielsweise ein Heizkreis, in dem lediglich ein einzelner erster Wärmetauscher vorgesehen ist. Dieser Wärmetaucher wird dann beispielsweise mit einem Heizmedium aus einem Wärmeenergiespeicher oder Wärmeenergiequelle gespeist.

Anstelle eines Reaktionsbehälters oder mehrerer Reaktionsbehälter kann grundsätzlich auch eine ausreichend lange Reaktionsstrecke, z.B. aufweisend eine Reaktionsleitung oder mehrere Reaktionsleitungen, vorgesehen sein, um für das mindestens auf die vorgegebene Reaktionstemperatur erwärmte Trinkwasser eine ausreichende Reaktionszeit zur Desinfektion zur Verfügung zu stellen.
In einem Ausführungsbeispiel ist vorgesehen, dass bei wenigstens einer bestimmten Menge an der mindestens einen Zapfstelle entnommenen Warmwassers sowohl dem sekundärseitigen Vorlauf des ersten Wärmetauschers als auch dem primärseitigen Vorlauf des zweiten Wärmetauschers eine Mischung an Kaltwasser und aus der Zirkulation stammenden Warmwasser zugeführt wird. Dies ist beispielsweise bei einem Teilzapfzustand der Fall, bei dem (noch) nicht die Nennlast angefordert bzw. eine Maximalmenge an mit einer bestimmten Betriebstemperatur (üblicherweise von 60°C) bereitgestellten Warmwassers entnommen wird.

Bei einer solchen Variante können grundsätzlich ein Zufluss an Kaltwasser und ein Zufluss an aus der Zirkulation stammenden Warmwasser zu dem primärseitigen Vorlauf des zweiten Wärmetauschers unmittelbar einen Zufluss an Kaltwasser und einen Zufluss an aus der Zirkulation stammenden Warmwasser zu dem primärseitigen Vorlauf des ersten Wärmetauschers bestimmen. Die einzelnen Zuflüsse werden hierbei beispielsweise über wenigstens ein 3-Wege-Ventil gesteuert, so das ein geringerer Zufluss zu dem sekundärseitigen Vorlauf des zweiten Wärmetauschers - in zumindest einer bestimmten Betriebssituation - zu einem unmittelbar höheren Zufluss zu dem primärseitigen Vorlauf des ersten Wärmetauschers führt.

Der Zufluss an Warmwasser aus der Zirkulation zu dem sekundärseitigen Vorlauf des ersten Wärmetauschers und zu dem sekundärseitigen Vorlauf des zweiten Wärmetauschers in Abhängigkeit von der an der mindestens einen Zapfstelle entnommenen Menge Warmwasser wird vorzugsweise über wenigstens einen Zuflussregulierer gesteuert. Bei einem solchen Zuflussregulierer kann es sich beispielsweise um ein 2-Wege- oder 3-Wege-Ventil handeln.

In einer Ausführungsvariante sind wenigstens zwei 3-Wege-Ventile zur Regulierung der Zuflüsse vorhergesehen. Hierüber ist eine besonders einfach steuerbare Zuflussregulierung möglich.

In einer Ausführungsvariante wird der zweite, zur Abkühlung des aus dem Reaktionsbehälter oder der Reaktionsstrecke stammenden Trinkwassers vorgesehene Wärmetauscher sowohl primärseitig als auch sekundärseitig mit Trinkwasser gespeist, während der erste, zur Erwärmung des Trinkwassers vorgesehene Wärmetauscher primärseitig mit Heizmedium gespeist wird. Der der Abkühlung dienende zweite Wärmetauscher ist somit ausschließlich im Trinkwasserkreis eingebunden, nicht jedoch im Heizkreis. Hiermit ist insbesondere eine Verringerung von Druckverlusten im Heizkreis erzielbar, da lediglich ein einzelner Wärmetauscher im Heizkreis vorgesehen werden muss, um das Trinkwasser sekundärseitig auf die gewünschte Temperatur zu bringen.

Bei einer Regelung der Zuflüsse an Kaltwasser und aus der Zirkulation stammenden Warmwassers ist in einer Ausführungsvariante als wenigstens eine Regelgröße eine Temperatur in einer Vorlaufleitung zu dem Reaktionsbehälter oder der Reaktionsstrecke genutzt. So kann anhand der Temperatur des Wassers in der Vorlaufleitung zu dem Reaktionsbehälter oder der Reaktionsstrecke der Zufluss an Kaltwasser zu dem primärseitigen Vorlauf des zweiten Wärmetauschers geregelt sein. Beispielsweise ist in diesem Zusammenhang vorgesehen, dass die Vorlauftemperatur zu dem Reaktionsbehälter oder der Reaktionsstrecke ≥70°C ist. In Abhängigkeit von der an der mindestens einen Zapfstelle entnommenen Menge Warmwasser würde dann beispielsweise ein Zuflussregulierer, üblicherweise in Form eines 3-Wege-Ventils, angesteuert, um den Zufluss an Kaltwasser zu dem primärseitigen Vorlauf des zweiten Wärmetauschers zu regeln. Beispielsweise wird hierüber bei einem Starkzapfzustand dem primärseitigen Vorlauf des zweiten, der Abkühlung dienenden Wärmetauschers mehr Kaltwasser zugeführt, um die erforderliche größere Menge an gewünschtem Warmwasser nach der thermischen Desinfektion auf die erforderliche Betriebstemperatur zu kühlen.

In einer Ausführungsvariante ist als wenigstens eine gegebenenfalls weitere Regelgröße, um in Abhängigkeit von der an der mindestens eine Zapfstelle entnommenen Menge Warmwasser den Zufluss an Kaltwasser und an aus der Zirkulation stammenden Warmwassers zu regeln, eine Temperatur des zur Zapfstelle geführten Warmwassers genutzt. Hierbei kann anhand der Temperatur des zur Zapfstelle geführten Warmwassers zum Beispiel der Zufluss an aus der Zirkulation stammenden Warmwassers zu dem sekundärseitigen Vorlauf des ersten Wärmetauschers geregelt werden. Dies schließt beispielsweise den Fall ein, dass ohne Zapfung dem sekundärseitigen Vorlauf des ersten, der Erwärmung des Trinkwassers dienenden Wärmetauschers lediglich Warmwasser aus der Zirkulation zugeführt wird. Der erste Wärmetauscher erwärmt mithin in einem Nicht-Zapfzustand einen Zirkulationswasseranteil mit einer Temperatur von 55°C auf eine (Reaktion-) Temperatur im Bereich von 70 bis 75°C, um einen leitungsseitigen Zirkulationsverlust auszugleichen. Bei Zapfung wird dem sekundärseitigen Vorlauf des ersten Wärmetauschers dann zusätzlich zu dem Warmwasser aus der Zirkulation Kaltwasser eines Kaltwasseranschlusses zugeführt, um die geforderte Menge desinfizierten Warmwassers an der wenigstens einen Zapfstelle bereitstellen zu können. In einem Starkzapfzustand wird dem sekundärseitigen Vorlauf des ersten Wärmetauschers dann beispielsweise überhaupt kein Warmwasser aus der Zirkulation zugeführt, sondern lediglich Kaltwasser.

Vor diesem Hintergrund ist in einer Ausführungsvariante dann auch vorgesehen, dem sekundärseitigen Vorlauf des ersten Wärmetauschers zur Erwärmung mindestens auf die Reaktionstemperatur
- in einem Teilzapfzustand sowohl Kaltwasser als auch aus der Zirkulation stammendes Warmwasser zuzuführen und
- in einem Starkzapfzustand nur Kaltwasser zuzuführen.

Insbesondere in dieser Variante kann dann wie zuvor erläutert auch vorgesehen sein, dem sekundärseitigen Vorlauf des ersten Wärmetauschers zur Erwärmung mindestens auf die Reaktionstemperatur nur aus der Zirkulation stammendes Warmwasser zuzuführen, wenn keine Entnahme von Warmwasser erfolgt (Nicht-Zapfzustand).

In einer Variante ist vorgesehen, das Wasser aus einem primärseitigen Rücklauf des zweiten Wärmetauschers Wasser aus dem sekundärseitigen Rücklauf des ersten Wärmetauschers zugemischt wird. Dem durch den ersten Wärmetauscher erwärmten und in Richtung des Reaktionsbehälters oder der Reaktionsstrecke geführten Trinkwasser wird somit Trinkwasser aus dem primärseitigen Rücklauf des zweiten Wärmetauschers zugemischt. Das Trinkwasser aus dem primärseitigen Rücklauf des zweiten Wärmetauschers wurde hierbei zuvor genutzt, um das aus dem Reaktionsbehälter oder der Reaktionsstrecke kommende und thermisch desinfizierte Trinkwasser wieder auf eine zur Entnahme geeignete Betriebstemperatur abzukühlen. Die Zumischung des Wassers aus dem primärseitigen Rücklauf des zweiten Wärmetauschers erfolgt dabei bevorzugt vor Einspeisung des Trinkwassers in den Reaktionsbehälter oder die Reaktionsstrecke.

Gemäß einem weiteren Aspekt der Erfindung, der mit dem zuvor erläuterten ersten Erfindungsaspekt und auch den zuvor erläuterten Ausführungsvarianten ohne Weiteres kombinierbar ist, ist ferner ein Verfahren zur Erwärmung von Trinkwasser und Bereitstellung von Warmwasser an mindestens einer Zapfstelle vorgeschlagen, bei dem der erste, zur Erwärmung des Trinkwassers vorgesehene Wärmetauscher und der zweite, zur Abkühlung des aus dem Reaktionsbehälter oder der Reaktionsstrecke stammenden Trinkwassers vorgesehene Wärmetauscher in einem Trinkwasserkreis parallel geschaltet sind.

Durch die Parallelschaltung der Wärmetauscher im Trinkwasserskreis lassen sich Druckverluste auf der Trinkwasserseite erheblich verringern. Insbesondere ergeben sich deutlich geringere Druckverluste als bei einer aus der DE 10 2014 003 244 A1 bekannten Lösung.

Beispielsweise sind die ersten und zweiten Wärmetauscher im Trinkwasserkreis parallel geschaltet, indem ein sekundärseitig und damit im Trinkwasserkreis vorgesehener Vorlauf des ersten Wärmetauschers und ein primärseitiger und ebenfalls im Trinkwasserkreis vorgesehener Vorlauf des zweiten Wärmetauschers über einen Zulauf mit Kaltwasser und/oder Warmwasser aus der Zirkulation parallel versorgt werden können und ein sekundärseitiger Rücklauf des ersten Wärmetauschers und ein primärseitiger Rücklauf des zweiten Wärmetauschers miteinander verbunden sind.

So kann in einer Ausführungsvariante vorgesehen sein, dass wenigstens in einem Zapfzustand ein Strom an Trinkwasser auf den sekundärseitigen Vorlauf des ersten Wärmetauschers und den primärseitigen Vorlauf des zweiten Wärmetauschers aufgeteilt werden kann und ferner ein Strom an Trinkwasser aus dem sekundärseitigen Rücklauf des ersten Wärmetauschers und ein Strom an Trinkwasser aus dem primärseitigen Rücklauf des zweiten Wärmetauschers miteinander vermischt werden.

Im Rahmen der Erfindung ist ferner eine Vorrichtung zur Erwärmung von Trinkwasser und Bereitstellung von Warmwasser an mindestens einer Zapfstelle vorgesehen, die sich auch für die Durchführung eines erfindungsgemäßen Verfahrens nach dem ersten und/oder zweiten Aspekt eignet.

Nach einer ersten erfindungsgemäßen Variante weist die Vorrichtung hierbei mindestens einen Zuflussregulierer auf, über den in Abhängigkeit von der an der mindestens einen Zapfstelle entnommenen Menge Warmwasser ein Zufluss an Kaltwasser und ein Zufluss an Warmwasser aus einer Zirkulation zu (a) einem sekundärseitigen Vorlauf des ersten, zur Erwärmung des Trinkwassers vorgesehenen Wärmetauschers und zu (b) einem primärseitigen Vorlauf des zweiten, zur Kühlung des aus dem Reaktionsbehälter oder der Reaktionsstrecke stammenden Trinkwassers vorgesehenen Wärmetauschers steuerbar, vorzugsweise regelbar ist.

Der mindestens eine Zuflussregulierer ist hierbei beispielsweise als 2-Wege- oder 3-Wege-Ventil ausgebildet. Für eine gezieltere Steuerung der einzelnen Zuflüsse können auch mehrere Zuflussregulierer vorgesehen sein.

In einer Variante ist eine Verbindungsleitung vorgesehen, über die aus der Zirkulation stammendes Warmwasser in die sekundärseitige Vorlaufleitung des ersten Wärmetauschers eingespeist werden kann. Ferner kann eine Verbindungsleitung vorgesehen sein, über die aus der Zirkulation stammendes Warmwasser in die primärseitige Vorlaufleitung des zweiten Wärmetauschers eingespeist werden kann.

Insbesondere in Kombination mit den vorgenannten Verbindungsleitungen kann ein Zuflussregulierer oder können mehrere Zuflussregulierer als Teil der Vorrichtung vorgesehen sein, um wahlweise aus der Zirkulation stammendes Warmwasser in die sekundärseitige Vorlaufleitung des ersten Wärmetauschers und/oder in die primärseitige Vorlaufleitung des zweiten Wärmetauschers einzuspeisen. So kann in Abhängigkeit von der Menge des an der mindestens eine Zapfstelle entnommenen Warmwasser über den oder die Zuflussregulierer variabel eingestellt werden, ob und welche Menge an aus der Zirkulation stammenden Warmwasser nur dem ersten Wärmetauscher, nur dem zweiten Wärmetauscher oder beiden Wärmetauscher geführt wird.

In einer Variante ist eine Verbindungsleitung vorgesehen, über die Kaltwasser in den sekundärseitigen Vorlauf des ersten Wärmetauschers eingespeist werden kann. Alternativ oder ergänzend kann eine Verbindungsleitung vorgesehen sein, über die Kaltwasser mit aus der Zirkulation stammendem und zu der primärseitigen Vorlaufleitung des zweiten Wärmetauschers geführtem Warmwasser vermischt werden kann. In diesem Zusammenhang kann auch ein Zuflussregulierer oder können mehrere Zufluss Regulierer vorgesehen sein, um einen Zufluss an Kaltwasser in die vorgenannte Verbindungsleitung zu regulieren und damit eine Menge an Kaltwasser zu regulieren, die mit dem aus der Zirkulation stammenden und zu der primärseitigen Vorlaufleitung des zweiten Wärmetauschers geführten Warmwasser vermischt wird.

Beispielsweise ist eine elektronische Steuereinheit mit einer Regelungselektronik als Teil der Vorrichtung vorgesehen, die mit dem mindestens einen Zuflussregulierer gekoppelt ist, um diesen zu steuern. Mittels der elektronischen Steuereinheit kann in einer Variante anhand einer Temperatur des zur Zapfstelle geführten Warmwassers als (zweiter) Regelgröße der Zufluss an aus der Zirkulation stammenden Warmwassers und der Zufluss an Kaltwasser zu dem sekundärseitigen Vorlauf des ersten Wärmetauschers und/oder zu dem primärseitigen Vorlauf des zweiten Wärmetauschers geregelt werden. In einem Ausführungsbeispiel liegt die vorgenannte Temperatur als Regelgröße an der Regelungselektronik an, um hierüber mittels wenigstens zweier Zuflussregulierer, beispielsweise jeweils in Form eines 3-Wege-Ventils, die einzelnen Zuflüsse zu den ersten und zweiten Wärmetauschern in Abhängigkeit vom aktuellen Zapfzustand zu regulieren. Derart werden beispielsweise entsprechende Ventile fremdkraftbetätigt und über die elektronische Steuereinheit variabel gesteuert, um sie in Abhängigkeit von einem Zapfzustand (stärker) zu schließen oder (stärker) zu öffnen, was insbesondere auch ein vollständiges Schließen oder Öffnen eines Zuflussregulierers bezüglich einer bestimmten Strömungsrichtung und Leitung einschließt.

Alternativ oder ergänzend ist eine elektronische Steuereinheit mit einer Regelungselektronik vorgesehen, die mit mindestens einem weiteren, heizkreisseitigen Zuflussregulierer gekoppelt ist und mittels der anhand einer Temperatur in einer Vorlaufleitung zu dem Reaktionsbehälter oder der Reaktionsstrecke als (weiterer, erster) Regelgröße ein primärseitiger Zufluss an Heizmedium zu dem ersten Wärmetauscher geregelt wird.

In einer Variante ist der primärseitige Rücklauf des zweiten Wärmetauschers mit dem sekundärseitigen Rücklauf des ersten Wärmetauschers verbunden. Derart wird für die Abkühlung in dem zweiten Wärmetauscher genutztes und mithin bereits auf eine Temperatur unterhalb der Reaktionstemperatur erwärmtes Trinkwasser einem stärker erwärmten Strom an Trinkwasser aus dem sekundärseitigen Rücklauf des ersten Wärmetauschers zugemischt. Die zugemischte Menge kann hierbei insbesondere davon abhängen, dass sichergestellt wird, dass im Vorlauf zu dem Reaktionsbehälter oder der Reaktionsstrecke eine vorgegebene Mindesttemperatur, von zum Beispiel 70°C, nicht unterschritten wird und die Temperatur des zu der wenigstens einen Zapfstelle geführten Warmwassers aus dem sekundärseitigen Rücklauf des zweiten Wärmetauschers auf eine vorgegebene Betriebstemperatur, von zum Beispiel ca. 60° C, abgekühlt wird.

Nach einem weiteren Erfindungsaspekt, der ohne Weiteres mit einem der vorgenannten Aspekte kombiniert werden kann, ist eine Vorrichtung zur Erwärmung von Trinkwasser und Bereitstellung von Warmwasser an mindestens einer Zapfstelle vorgeschlagen, bei der der erste, zur Erwärmung des Trinkwassers vorgesehene Wärmetauscher und der zweite, zur Abkühlung des aus dem Reaktionsbehälter oder der Reaktionsstrecke stammenden Trinkwassers vorgesehene Wärmetauscher in dem Trinkwasserkreis parallel geschaltet sind.

Hierdurch lassen sich die zuvor im Zusammenhang mit einem entsprechend ausgestalteten Verfahren erläuterten Vorteile erzielen, insbesondere ein einfacher aufgebauter Heizkreis und eine Verringerung von Druckverlusten im Trinkwasserkreis..

Grundsätzlich lassen sich mit der erfindungsgemäßen Lösung Heizungsrücklauftemperatur von ca. 12 °C bei großer Zapfleistung und ca. 57 °C bei kleiner Zapfleistung ohne Weiteres realisieren.

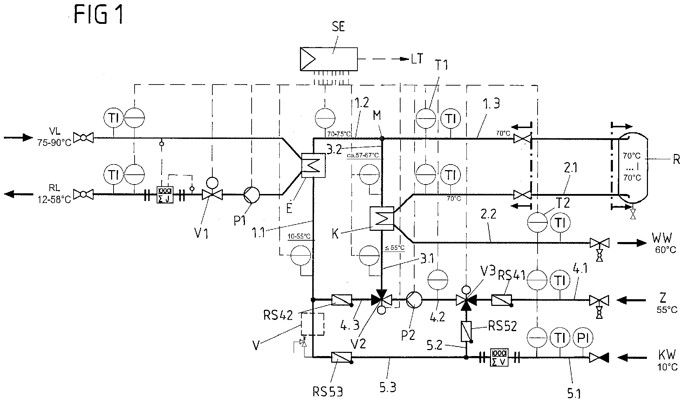

Eine mögliche Ausführungsvariante einer erfindungsgemäßen Lösung, die alle vorgenannten Aspekte verwirklicht, ist in der nachfolgend noch näher erläuterten Figur 1 veranschaulicht.

Hierbei zeigt:
- Figur 1: ein Schaltschema für eine Ausführungsvariante einer erfindungsgemäßen Vorrichtung zur Trinkwassererwärmung unter Durchführung einer Variante eines erfindungsgemäßen Verfahrens.

Die Figur 1 zeigt ein Schaltschema einer erfindungsgemäßen Ausführungsvariante einer Vorrichtung zur Erwärmung von Trinkwasser und Bereitstellung von Warmwasser WW an mindestens einer Zapfstelle. Das Warmwasser WW sollte hierbei mit einer Zapf- oder Betriebstemperatur von ca. 60° C bereitgestellt werden und zuvor zur Legionellenprävention durch Erwärmung desinfiziert worden sein. Hierfür ist im Trinkwasserkreis ein Reaktionsbehälter R für eine thermische Desinfektion vorgesehen. Diesem wird auf eine Temperatur von wenigstens 70°C erwärmtes Trinkwasser zugeführt. Nach einer vorgesehenen Verweildauer oder Reaktionszeit gelangt das erwärmte Trinkwasser nach einer Abkühlung auf die vorgesehene Betriebstemperatur als Warmwasser WW in ein Leitungssystem und kann an einer Zapfstelle entnommen werden.

Für ungenutztes Warmwasser ist in an sich bekannter Weise eine Zirkulation Z vorgesehen. In dieser hier nicht näher dargestellten Zirkulation Z wird ungenutztes Warmwasser in einer Zirkulationsleitung 4.1 oder mehreren Zirkulationsleitungen mit einer Temperatur im Bereich von 55°C geführt. Zur Temperaturkontrolle ist die dargestellte Vorrichtung im Übrigen an einer Vielzahl ihrer Leitungen mit jeweils einer Temperaturanzeige TI ausgestattet.

Zur Erwärmung des Trinkwassers auf die gewünschte Vorlauftemperatur, bevor das Trinkwasser über eine Vorlaufleitung 1.3 dem Reaktionsbehälter R zugeführt wird, ist ein erster Wärmetauscher in Form eines Erwärmers E vorgesehen. Dieser Erwärmer, E ist primärseitig in einem Heizkreis angeordnet. Dabei wird dem Erwärmer E, zum Beispiel über einen Wärmeenergiespeicher oder Wärmeenergiequelle einer Kessel- und/oder Fernwärmeanlage ein Heizmedium, zum Beispiel Heizwasser, über eine Vorlaufleitung in Form eines primärseitigen Erwärmervorlaufs VL mit einer Temperatur im Bereich von z. B. 75°C bis 90°C zugeführt. Ausgehend von dem Erwärmer wird das Heizmedium dann mittels einer Pumpe P1 in einer Rücklaufleitung in Form eines primärseitig Erwärmerrücklaufs RL zurückgeführt. Hierbei ist das Heizmedium in der Rücklaufleitung RL auf eine Temperatur von 12°C bis 58°C abgekühlt, bei der dargestellten erfindungsgemäßen Variante in einem Starkzapffall wenigstens auf eine Temperatur von ca. 15°C

Der vergleichsweise sehr einfache Heizkreisseitige Aufbau mit primärseitigem Erwärmervorlauf VL und primärseitigen Erwärmerrücklauf RL, der ohne zusätzliche Einbindung eines weiteren Wärmetauschers auskommt, geht mit einer Parallelschaltung des Erwärmers E mit einem zweiten, als Kühler K genutzten Wärmetauscher im Trinkwasserkreis und der Steuerung eines Zuflusses an Kaltwasser KW und eines Zuflusses an aus der Zirkulation Z stammenden Warmwassers zu den beiden Wärmetauschern E und K einher.

So ist eine Zuflussregulierung mit mehreren Zuflussregulieren in Form von 3-Wege-Ventilen V2, V3 und mehreren Verbindungsleitungen 4.2 ,4.3, 5.2 und 5.3 vorgesehen, um einem sekundärseitigen Erwärmervorlauf 1.1 und einem primärseitigen Kühlervorlauf 3.1 variable Mengen an Trinkwasser aus der Zirkulation Z und an Kaltwasser KW in Abhängigkeit von der entnommenen Menge Warmwasser WW zuführen. Über die 3-Wege-Ventile V2 und V3 wird hierbei in Abhängigkeit von einer entnommenen Menge Warmwasser WW gesteuert, ob dem sekundärseitigen Erwärmervorlauf 1.1 zu dem Erwärmer E lediglich Wasser aus einer Zirkulationsleitung 4.1 der Zirkulation Z, eine (bedarfsgerecht einstellbare) Mischung aus Kaltwasser LW uns aus Wasser aus der Zirkulation Z oder nur Kaltwasser KW zugeführt wird. Ebenso wird über die 3-Wege-Ventile V2 und V3 gesteuert, inwieweit dem primärseitigen Vorlauf 3.1 des Kühlers K Trinkwasser aus der Zirkulationsleitung 4.1 oder eine Mischung aus Kaltwasser KW aus einer Kaltwasserleitung 5.1 und aus Trinkwasser aus der Zirkulationsleitung 4.1 zugeführt wird, um hierüber aus dem Reaktionsbehälter R kommendes Trinkwasser auf die Betriebstemperatur abzukühlen.

Hierfür ist das eine 3-Wege-Ventil V3 einerseits mit der Zirkulationsleitung 4.1 und andererseits mit einer aus der Kaltwasserleitung 5.1 abgezweigten Verbindungsleitung 5.2 und einer Verbindungsleitung 4.2 verbunden. Das andere 3-Wege-Ventil V2 ist ferner mit der Verbindungsleitung 4.2 verbunden sowie mit dem primärseitigen Kühlervorlauf 3.1 und einer weiteren Verbindungsleitung 4.3 zum sekundärseitigen Erwärmervorlauf 1.1. Über das eine (erste) 3-Wege-Ventil V3 ist somit steuerbar, welche Menge an Warmwasser aus der Zirkulationsleitung 4.1 und an Kaltwasser KW aus der Kaltwasserleitung 5.1 in Richtung des primärseitigen Kühlervorlaufs 3.1 geführt wird. Über das andere (zweite) 3-Wege-Ventil V2 ist ferner steuerbar, welche Menge an aus der Zirkulationsleitung 4.1 stammenden Trinkwassers oder einer Mischung aus Trinkwasser aus der Zirkulationsleitung 4.1 und der Kaltwasserleitung 5.1 tatsächlich in den primärseitigen Kühlervorlauf 3.1 eingespeist und über die Verbindungsleitung 4.3 zum sekundärseitigen Erwärmervorlauf 1.1 geführt wird. Gleichzeitig kann über eine Verbindungsleitung 5.3 zwischen der Kaltwasserleitung 5.1 und dem sekundärseitigen Erwärmervorlauf 1.1 Kaltwasser KW direkt zu dem Erwärmer E geführt werden.

Zur Sicherstellung der gewünschten Strömungsrichtungen sind im Übrigen in der hier dargestellten Zuflussregulierung auch mehrere Rückschlagklappen RS41, RS42, RS52 und RS53 in der Zirkulationsleitung 4.1 und den Verbindungsleitungen 4.3, 5.2 und 5.3 vorgesehen.

Zur Förderung des Trinkwassers ist ferner vorliegend in der Verbindungsleitung 4.2 zwischen den beiden 3-Wege-Ventilen V2 und V3 eine Pumpe P2 vorgesehen. Zur Förderung des Heizmediums im Heizkreis ist eine weitere Pumpe T1 im primärseitigen Erwärmerrücklauf RL vorgesehen. Im Rücklauf RL des Heizkreises ist im Übrigen auch ein weiterer Zuflussregulierer in Form eines 2-Wege-Ventils vorgesehen, um einen primärseitigen Volumenstrom durch den Erwärmer E zu regulieren.

Um das primärseitig an einem Kühlerrücklauf 3.2 des Kühlers K zur Verfügung stehende Trinkwasser zu nutzen, wird dieses an einem Mischpunkt M mit dem erwärmten Trinkwasser aus dem Erwärmer E vermischt. Hierfür ist der primärseitige Kühlerrücklauf 3.2 mit einem sekundärseitigen Erwärmerrücklauf 1.2 verbunden, sodass Ströme aus Trinkwasser aus dem primärseitigen Kühlerrücklauf 3.2 und dem sekundärseitigen Erwärmerrücklauf 1.2 in der Vorlaufleitung 1.3 gemischt und dem Reaktionsbehälter R zugeführt werden. Um dabei sicherzustellen, dass eine Temperatur des zum Reaktionsbehälter R geführten Trinkwassers nie unter 70 °C fällt und vorzugsweise für eine ausreichende thermische Desinfektion ≥70°C ist, ist ein Temperaturgeber T1 vorgesehen. Über diesen Temperaturgeber T1 wird eine Temperatur des Trinkwassers im Vorlauf zu dem Reaktionsbehälter R gemessen und als (erste) Regelgröße an eine elektronische Steuereinheit SE übertragen.

Als weitere (zweite) Regelgröße wird ferner über einen Temperaturgeber T2 eine Temperatur in einem sekundärseitigen Kühlerrücklauf 2.2, der der Warmwassereinspeisung dient, erfasst und ausgewertet. Hierüber soll sichergestellt werden, dass über den Kühler K aus dem Reaktionsbehälter R stammendes und ihm über einen sekundärseitigen Kühlervorlauf 2.1 (mit einer Temperatur von etwa 70°C) zugeführtes, desinfiziertes Trinkwasser ausreichend abgekühlt und in ausreichender Menge als Warmwasser WW zur Verfügung gestellt wird. Die gegebenenfalls mit einer (Gebäude-) Leittechnik LTE verbundene elektronische Steuereinheit SE regelt dabei auf Basis der Temperaturen des Temperaturgebers T1, der an der mit dem sekundärseitigen Erwärmerrücklauf 1.2 und dem primärseitigen Kühlerrücklauf 3.2 verbundenen Vorlaufleitung 1.3 zum Reaktionsbehälter R vorgesehen ist, die Stellung des 2-Wege-Ventils V1 im Heizkreis und damit den primärseitigen Zufluss an Heizmedium zu dem Erwärmer E. Ferner regelt die elektronische Steuereinheit auf Basis der Temperaturen des Temperaturgebers T2 im sekundärseitigen Kühlerrücklauf 2.2 die Stellungen der 3-Wege-Ventile V2 und V3. Die Regelung erfolgt hierbei derart, dass heizkreisseitig zwischen dem primärseitigen Erwärmervorlauf VL und dem primärseitigen Erwärmerrücklauf RL eine möglichst große Spreizung für einen damit vorteilhaften Anschlusswert in der Fernwärme, ein erhöhter Brennwertnutzen bei Kesselanlagen, reduzierte Verlustleistungen in den Rücklaufleitungen sowie reduzierte Pumpenleistung auf Grund geringerer Heizungsvolumina, insbesondere bei Starkzapfung erzielt werden. Darüber hinaus ergibt sich gerade bei Teil- und Nennlast ein großes Temperaturgefälle zwischen dem sekundärseitigen Erwärmervorlauf 1.1 und dem sekundärseitigen Erwärmerrücklauf 1.2, da dem Erwärmer E größtenteils oder ausschließlich Kaltwasser KW zur Erwärmung auf die Reaktionstemperatur oder eine darüberliegende Temperatur aufgrund der Beimischung des kühleren Trinkwassers aus dem primärseitigen Kühlerrücklauf 3.2 zugeführt wird. Dem Erwärmer E wird somit in einem Teilzapfzustand oder Starkzapfzustand (bei Teil- oder Nennlast) eine große Menge frischen Kaltwassers zugeführt.

Bei der dargestellten Ausführungsvariante kann somit der Heizkreis für den Erwärmer E mit einer Vorlauftemperatur ≥70° C und einer Rücklauftemperatur von 12°C bis 58°C über eine einfache Volumenstromregelung betrieben werden. In einem Starkzapfzustand oder bei Nennlast erwärmt der Erwärmer E das Kaltwasser KW von 10°C auf 70 bis 75°C, wohingegen im Nicht-Zapfzustand der Erwärmer E lediglich einen Zirkulationswasseranteil von 55°C auf 70°C bis 75°C erwärmt, um den leitungsseitigen Zirkulationsverlust auszugleichen. Im Teilzapfzustand bzw. bei Teillast erwärmt der Erwärmer E dann eine ihm über die 3-Wege-Ventile V2 und V3 zugeführte Mischung aus Kaltwasser KW mit einer Temperatur von 10°C und Zirkulationswasser aus der Zirkulation Z mit einer Temperatur von 55°C auf die gewünschte Vorlauftemperatur für den Reaktionsbehälter R, die im Bereich von 70°C bis 75°C liegt.

Der Kühler K wiederum kühlt das vom Reaktionsbehälter R kommende Warmwasser, das eine Temperatur von etwa 70°C aufweist, auf die gewünschte Betriebstemperatur von ca. 60°C, wobei in Abhängigkeit von den unterschiedlichen Betriebszuständen auch hier über die 3-Wege-Ventile V2 und V3 die Zuflüsse aus der Zirkulationsleitung 4.1 und aus der Kaltwasserleitung 5.1 mithilfe der elektronischen Steuereinheit SE bedarfsgerecht geregelt werden. So wird bei Nicht-Zapfung ausschließlich über das 3-Wege-Ventil V2 eine entsprechende Zirkulationswassermenge mit ca. 55°C zur Kühlung genutzt. Das weitere Ventil V3 (Anschluss "B" - unterer Ventilabgang) ist so lange geschlossen, bis eine zusätzliche Kühllast erforderlich wird. Dies ist dann bei stärkerer Zapfung der Fall. Hier wird dann Kaltwasser KW über das andere 3-Wege-Ventil V3 in die Verbindungsleitung 4.2 zugemischt. Regeltechnisch erfolgt hierbei ein Funktionswechsel von dem einen 3-Wege-Ventil V2 auf das andere 3-Wege-Ventil V3. Beide Ventile V2 und V3 werden hierbei jedoch stets über die elektronische Steuereinheit SE so betrieben, dass die gewünschte Betriebstemperatur für das Warmwasser WW von ca. 60°C sichergestellt ist.

Die aus dem Kühler K austretende erwärmte Menge Trinkwasser mit einer Temperatur von ca. 57°C bis 67°C mischt sich hierbei stets am Mischpunkt M mit der aus dem Erwärmer E austretenden Warmwassermenge zu der gewünschten bzw. erforderlichen Reaktionstemperatur von 70°C.

In einer Weiterbildung kann ein zusätzlicher Wärmetauscher als Vorwärmer in der Kaltwassereinspeisung vorgesehen sein. Ein solcher Vorwärmer ist dann in der Zuleitung zum sekundärseitigen Erwärmervorlauf 1.1 - vor der Zuführung des Wassers aus der Zirkulation Z - angeordnet, sodass der Erwärmer E als Nachwärmer fungiert. In der Figur 1 ist eine solche Position V des Vorwärmer skizziert. Primärseitig ist ein solcher Vorwärmer dann vorzugsweise mit der Rücklauftemperatur des Erwärmers E beaufschlagt. Hierfür ist folglich im Heizkreis der Rücklauf des Erwärmers E angezapft, um Wasser aus dem primärseitigen Rücklauf des Erwärmers E für einen primärseitigen Vorlauf des zusätzlichen Vorwärmers zu nutzen.

### Bezugszeichenliste

- 1.1: Sekundärseitiger Erwärmervorlauf
- 1.2: Sekundärseitiger Erwärmerrücklauf
- 1.3: Zuführung / Vorlaufleitung Reaktionsbehälter
- 2.1: Sekundärseitiger Kühlervorlauf
- 2.2: Sekundärseitiger Kühlerrücklauf / Warmwassereinspeisung
- 3.1: Primärseitiger Kühlervorlauf
- 3.2: Primärseitiger Kühlerrücklauf
- 4.1: Zirkulationsleitung
- 4.2: Verbindungsleitung (zum primärseitigen Kühlervorlauf)
- 4.3: Verbindungsleitung (zum sekundärseitigen Erwärmervorlauf)
- 5.1: Kaltwasserleitung
- 5.2: Verbindungsleitung (zur Zirkulationsleitung)
- 5.3: Verbindungsleitung (zum sekundärseitigen Erwärmervorlauf)
- E: Erwärmer (1. Wärmetauscher)
- K: Kühler (2. Wärmetauscher)
- KW: Kaltwasser
- LT: Leittechnik
- M: Mischpunkt
- P1, P2: Pumpe
- R: Reaktionsbehälter
- RL: Primärseitiger Erwärmerrücklauf
- RS41, RS42,: Rückschlagklappe
- RS51, RS52 SE: Steuereinheit
- T1, T2: Temperaturgeber
- Tl: Temperaturanzeige
- V: Position Vorwärmer
- V1, V2, V3: (2-/3-Wege-)Ventil (Zuflussregulierer)
- VL: Primärseitiger Erwärmervorlauf
- WW: Warmwasser
- Z: Zirkulation

## Patentansprüche

1. Verfahren zur Erwärmung von Trinkwasser und Bereitstellung von Warmwasser (WW) an mindestens einer Zapfstelle, wobei
- das Trinkwasser mittels wenigstens eines ersten Wärmetauschers (E) mindestens auf eine Reaktionstemperatur erwärmt wird und das mindestens auf die Reaktionstemperatur erwärmte Trinkwasser über eine sekundärseitige Rücklaufleitung (1.2) des ersten Wärmetauschers (E) einem Reaktionsbehälter (R) oder einer Reaktionsstrecke zugeführt wird,
- aus dem Reaktionsbehälter (R) oder der Reaktionsstrecke stammendes Trinkwasser mittels wenigstens eines zweiten Wärmetauschers (K) abgekühlt und über eine sekundärseitige Rücklaufleitung (2.2) des zweiten Wärmetauschers (K) in Richtung der Zapfstelle geführt wird, und
- wenigstens eine Zirkulation (Z) für zirkulierendes Warmwasser vorgesehen ist,
**dadurch gekennzeichnet, dass**
in Abhängigkeit von der an der mindestens einen Zapfstelle entnommenen Menge Warmwasser (WW) ein Zufluss an Kaltwasser (KW) und ein Zufluss an Warmwasser aus der Zirkulation (Z) zu (a) einem sekundärseitigen Vorlauf (1.1) des ersten, zur Erwärmung des Trinkwassers vorgesehenen Wärmetauschers (E) und (b) einem primärseitigen Vorlauf (3.1) des zweiten, zur Abkühlung des aus dem Reaktionsbehälter (R) oder der Reaktionsstrecke stammenden Trinkwassers vorgesehenen Wärmetauschers (K) gesteuert wird.

2. Verfahren nach Anspruch 1, **dadurch gekennzeichnet, dass** bei wenigstens einer bestimmten Menge an der mindestens einen Zapfstelle entnommenen Warmwassers (WW) sowohl dem sekundärseitigen Vorlauf (1.1) des ersten Wärmetauschers (E) als auch dem primärseitigen Vorlauf (3.1) des zweiten Wärmetauschers (K) eine Mischung an Kaltwasser und an aus der Zirkulation (Z) stammenden Warmwasser zugeführt wird.

3. Verfahren nach Anspruch 1 oder 2, **dadurch gekennzeichnet, dass** über wenigstens einen Zuflussregulierer (V2, V3) der Zufluss an Warmwasser (WW) aus der Zirkulation (Z) zu dem sekundärseitigen Vorlauf (1.1) des ersten Wärmetauschers (E) und zu dem primärseitigen Vorlauf (3.1) des zweiten Wärmetauschers (K) in Abhängigkeit von der an der mindestens einen Zapfstelle entnommenen Menge Warmwasser (WW) gesteuert wird.

4. Verfahren nach einem der Ansprüche 1 bis 3, **dadurch gekennzeichnet, dass** der erste, zur Erwärmung des Trinkwassers vorgesehene Wärmetauscher (E) primärseitig mit Heizmedium gespeist wird und der zweite, zur Abkühlung des aus dem Reaktionsbehälter oder der Reaktionsstrecke stammenden Trinkwassers vorgesehene Wärmetauscher (K) sowohl primärseitig als auch sekundärseitig mit Trinkwasser gespeist wird.

5. Verfahren nach einem der vorhergehenden Ansprüche, **dadurch gekennzeichnet, dass** als wenigstens eine Regelgröße, um einen primärseitigen Zufluss an Heizmedium zu dem ersten Wärmetauscher (E) zu regeln, eine Temperatur in einer Vorlaufleitung (1.3) zu dem Reaktionsbehälter (R) oder zu der Reaktionsstrecke genutzt wird.

6. Verfahren nach einem der vorhergehenden Ansprüche, **dadurch gekennzeichnet, dass** als wenigstens eine Regelgröße, um in Abhängigkeit von der an der mindestens einen Zapfstelle entnommenen Menge Warmwasser (WW) den Zufluss an Kaltwasser (KW) und an aus der Zirkulation (Z) stammenden Warmwassers (WW) zu regeln, eine Temperatur des zur Zapfstelle geführten Warmwassers (WW) genutzt wird.

7. Verfahren nach Anspruch 6, **dadurch gekennzeichnet, dass** anhand der Temperatur des zur Zapfstelle geführten Warmwassers (WW) der Zufluss an aus der Zirkulation stammenden Warmwassers und an Kaltwasser (KW) zu dem sekundärseitigen Vorlauf (1.1) des ersten Wärmetauschers (E) und/oder zu dem primärseitigen Vorlauf (3.1) des zweiten Wärmetauschers (K) geregelt wird.

8. Verfahren nach einem der vorhergehenden Ansprüche, **dadurch gekennzeichnet, dass** dem sekundärseitigen Vorlauf (1.1) des ersten Wärmetauschers (E) zur Erwärmung mindestens auf die Reaktionstemperatur
- in einem Teilzapfzustand sowohl Kaltwasser (KW) als auch aus der Zirkulation (Z) stammendes Warmwasser zugeführt wird und
- in einem Starkzapfzustand nur Kaltwasser (KW) zugeführt wird.

9. Verfahren nach einem der vorhergehenden Ansprüche, **dadurch gekennzeichnet, dass** dem sekundärseitigem Vorlauf (1.1) des ersten Wärmetauschers (E) zur Erwärmung mindestens auf die Reaktionstemperatur nur aus der Zirkulation (Z) stammendes Warmwasser zugeführt wird, wenn keine Entnahme von Warmwasser (WW) erfolgt.

10. Verfahren nach einem der vorhergehenden Ansprüche, **dadurch gekennzeichnet, dass** dem primärseitigen Vorlauf (3.1) des zweiten Wärmetauschers (K) für die Abkühlung des ihm sekundärseitig zugeführten, aus dem Reaktionsbehälter oder der Reaktionsstrecke stammenden Trinkwassers
- in einem Teilzapfzustand sowohl Kaltwasser (KW) als auch aus der Zirkulation (Z) stammendes Warmwasser zugeführt wird und
- nur aus der Zirkulation (Z) stammendes Warmwasser zugeführt wird, wenn keine Entnahme von Warmwasser (WW) erfolgt.

11. Verfahren nach einem der vorhergehenden Ansprüche, **dadurch gekennzeichnet, dass** Wasser aus einem primärseitigen Rücklauf (3.2) des zweiten Wärmetauschers (K) Wasser aus dem sekundärseitigen Rücklauf (1.2) des ersten Wärmetauschers (E) zugemischt wird.

12. Verfahren zur Erwärmung von Trinkwasser und Bereitstellung von Warmwasser (WW) an mindestens einer Zapfstelle, insbesondere nach einem der Ansprüche 1 bis 11, wobei
- das Trinkwasser mittels wenigstens eines ersten Wärmetauschers (E) mindestens auf eine Reaktionstemperatur erwärmt wird und das mindestens auf die Reaktionstemperatur erwärmte Trinkwasser über eine sekundärseitige Rücklaufleitung (1.2) des ersten Wärmetauschers (E) einem Reaktionsbehälter (R) oder einer Reaktionsstrecke zugeführt wird, und
- aus dem Reaktionsbehälter (R) oder der Reaktionsstrecke stammendes Trinkwasser mittels wenigstens eines zweiten Wärmetauschers (K) abgekühlt und über eine sekundärseitige Rücklaufleitung (2.2) des zweiten Wärmetauscher (K) in Richtung der Zapfstelle geführt wird,
wobei wenigstens der erste Wärmetauscher (E) primärseitig in einen Heizkreis eingebunden ist, in dem ein Heizmedium zum Erwärmen des sekundärseitig in einem Trinkwasserkreis geführten Trinkwassers bereitgestellt ist,
**dadurch gekennzeichnet, dass**
der erste, zur Erwärmung des Trinkwassers vorgesehene Wärmetauscher (E) und der zweite zur Abkühlung des aus dem Reaktionsbehälter (R) oder der Reaktionsstrecke stammenden Trinkwassers vorgesehene Wärmetauscher (K) in dem Trinkwasserkreis parallel geschaltet sind.

13. Verfahren nach Anspruch 12, **dadurch gekennzeichnet, dass** in wenigstens einem Zapfzustand ein Strom an Trinkwasser auf den sekundärseitigen Vorlauf (1.1) des ersten Wärmetauschers (E) und den primärseitigen Vorlauf (3.1) des zweiten Wärmetauschers (K) aufgeteilt wird und ferner ein Strom an Trinkwasser aus dem sekundärseitigen Rücklauf (1.2) des ersten Wärmetauschers (E) und ein Strom an Trinkwasser aus dem primärseitigen Rücklauf (3.2) des zweiten Wärmetauschers (K) miteinander vermischt werden.

14. Vorrichtung zur Erwärmung von Trinkwasser und Bereitstellung von Warmwasser (WW) an mindestens einer Zapfstelle, wobei
- die Vorrichtung wenigstens einen ersten Wärmetauscher (E) umfasst, um Trinkwasser mindestens auf eine Reaktionstemperatur zu erwärmen, wobei der erste Wärmetauscher (E) über eine sekundärseitige Rücklaufleitung (1.2) mit einem Reaktionsbehälter (R) oder einer Reaktionsstrecke der Vorrichtung verbunden ist, um das mindestens auf die Reaktionstemperatur erwärmte Trinkwasser dem Reaktionsbehälter (R) oder der Reaktionsstrecke zuzuführen,
- die Vorrichtung wenigstens einen zweiten Wärmetauscher (E) umfasst, um aus dem Reaktionsbehälter (R) oder der Reaktionsstrecke stammendes Trinkwasser abzukühlen, wobei der zweite Wärmetauscher (K) abgekühltes Trinkwasser über eine sekundärseitige Rücklaufleitung (2.2) in Richtung der Zapfstelle führt, und
- die Vorrichtung ferner wenigstens eine Zirkulation (Z) für zirkulierendes Warmwasser umfasst,
**dadurch gekennzeichnet, dass**
die Vorrichtung mindestens einen Zuflussregulierer (V2, V3) aufweist, über den in Abhängigkeit von der an der mindestens einen Zapfstelle entnommenen Menge Warmwasser (WW) ein Zufluss an Kaltwasser (KW) und ein Zufluss an Warmwasser aus der Zirkulation (Z) zu (a) einem sekundärseitigen Vorlauf (1.1) des ersten, zur Erwärmung des Trinkwassers vorgesehenen Wärmetauschers (E) und (b) einem primärseitigen Vorlauf (3.1) des zweiten, zur Abkühlung des aus dem Reaktionsbehälter (R) oder der Reaktionsstrecke stammenden Trinkwassers vorgesehenen Wärmetauschers (K) steuerbar ist.

15. Vorrichtung zur Erwärmung von Trinkwasser und Bereitstellung von Warmwasser (WW) an mindestens einer Zapfstelle, insbesondere nach Anspruch 14, wobei
- die Vorrichtung wenigstens einen ersten Wärmetauscher (E) umfasst, um Trinkwasser mindestens auf eine Reaktionstemperatur zu erwärmen, wobei der erste Wärmetauscher (E) über eine sekundärseitige Rücklaufleitung (1.2) mit einem Reaktionsbehälter (R) oder einer Reaktionsstrecke der Vorrichtung verbunden ist, um das mindestens auf die Reaktionstemperatur erwärmte Trinkwasser dem Reaktionsbehälter (R) oder der Reaktionsstrecke zuzuführen,
- die Vorrichtung wenigstens einen zweiten Wärmetauscher (E) umfasst, um aus dem Reaktionsbehälter (R) oder der Reaktionsstrecke stammendes Trinkwasser abzukühlen, wobei der zweite Wärmetauscher (K) abgekühltes Trinkwasser über eine sekundärseitige Rücklaufleitung (2.2) in Richtung der Zapfstelle führt, und
- wenigstens der erste Wärmetauscher (E) primärseitig in einen Heizkreis eingebunden ist, in dem ein Heizmedium zum Erwärmen des sekundärseitig in einem Trinkwasserkreis geführten Trinkwassers bereitgestellt ist,
**dadurch gekennzeichnet, dass**
der erste, zur Erwärmung des Trinkwassers vorgesehene Wärmetauscher (E) und der zweite zur Abkühlung des aus dem Reaktionsbehälter (R) oder der Reaktionsstrecke stammenden Trinkwassers vorgesehene Wärmetauscher (K) in dem Trinkwasserkreis parallel geschaltet sind
